Europäisches Patentamt

European Patent Office

Office européen des brevets

(11) Veröffentlichungsnummer: **0 219 622 B1**

# (12) EUROPÄISCHE PATENTSCHRIFT

(45) Veröffentlichungstag der Patentschrift: **02.09.92**

(21) Anmeldenummer: **86110300.0**

(22) Anmeldetag: **25.07.86**

(51) Int. Cl.5: **E03C 1/28**, F16K 13/10,
E03D 9/052

(54) **Vorrichtung zum Steuern mindestens eines Gasstromes.**

(30) Priorität: **25.07.85 DE 3526587**
**27.09.85 DE 3534494**

(43) Veröffentlichungstag der Anmeldung:
**29.04.87 Patentblatt 87/18**

(45) Bekanntmachung des Hinweises auf die
Patenterteilung:
**02.09.92 Patentblatt 92/36**

(84) Benannte Vertragsstaaten:
**AT BE CH DE FR GB IT LI LU NL SE**

(56) Entgegenhaltungen:
**FR-A- 874 815**
**US-A- 2 371 923**
**US-A- 3 118 737**
**US-A- 3 548 424**
**US-A- 3 961 641**

(73) Patentinhaber: **Menge, Heinrich**
**Eissendorfer Pferdeweg 45**
**W-2100 Hamburg 90(DE)**

(72) Erfinder: **Menge, Heinrich**
**Eissendorfer Pferdeweg 45**
**W-2100 Hamburg 90(DE)**

(74) Vertreter: **Heldt, Gert, Dr. Dipl.-Ing. et al**
**Neuer Wall 59 III**
**W-2000 Hamburg 36(DE)**

## Beschreibung

Die Erfindung betrifft eine Vorrichtung zum Steuern eines Abluftstromes, der von einem durch eine in einem Spülkasten angesammelte Spülfüssigkeit spülbaren Toilettenbecken in ein Abluftrohr und mindestens ein von einer Flüssigkeitsvorlage absperrbares Rohr hindurchtritt, das mit einem Abströmende und einem Anströmende in die Flüssigkeitsvorlage einmündet, die einen steuerbaren Flüssigkeitsauslaß in einer Höhe höchstens aufweist, auf der bei geöffnetem Flüssigkeitsauslaß eine Verbindung zwischen Ab- und Anströmende vorgesehen ist. Derartige Vorrichtungen sind auch als Geruchsverschlüsse bekannt. In dieser Eigenschaft sperren sie im Regelfall ein überriechendes Gas gegenüber einem Rohrende ab, aus dem keine Gerüche austreten sollen. Sie sind auch bereits in Toilettenanlagen verwendet worden, bei denen ein Abluftstrom aus einem Toilettenbecken abgesaugt und durch ein Abluftrohr abgeführt wird. Eine solche Toilettenanlage ist aus der US-A-3 548 424 bekannt geworden. Bei dieser ist der Geruchsverschluß im Wasserkasten ausgebildet. Allerdings wird bei dieser Toilettenanlage sowohl die Befüllung als auch die Entleerung der Flüssigkeitsvorlage mit Hilfe eines komplizierten Druck- bzw. Unterdrucksystems vorgenommen. Dieses System enthält eine vom Unterdruck gesteuerte Ventilanordung sowie einen Unterdruckkessel, die über Drosselstellen gesteuert werden. Damit ist die Befüllung des Geruchsverschlusses unabhängig von der Befüllung des Spülkastens. Für eine notwendige Kopplung der Funktion der Wasserbefüllung einerseits bzw. Wasserentleerung andererseits des Spülkastens und der Entleerung einerseits bzw. Befüllung der Wasservorlage andererseits ist nicht gesorgt. Darüber hinaus macht die Vielzahl der Ventile und Steuerungsvorrichtungen die aus der Entgegenhaltung bekannt gewordene Toilettenanlage sehr störanfällig und teuer.

Aufgabe der vorliegenden Erfindung ist es daher eine Vorrichtung der einleitend genannten Art so zu verbessern, daß mit ihrer Hilfe der Abluftstrom sicher und auf billige Art und Weise in gewünschter Weise gesteuert werden kann.

Diese Aufgabe wird erfingungsgemäß dadurch gelöst, daß der Flüssigkeitsauslaß sich steuerbar in Richtung auf den Spülkasten öffnet und der Spülkasten über einen die Spülflüssigkeit aus der gefüllten Flüssigkeitsvorlage abgebenden Überlauf mit einer Flüssigkeitsquelle verbunden ist.

Diese Vorrichtung ist unabhängig von jeglicher Luftdrucksteuerung und macht sich ausschließlich die Fähigkeit der Flüssigkeit zu nutze, auf Grund von Ventilstellungen in die eine oder andere Richtung gelenkt zu werden. Bei geschlossenem Ventil füllt sich die Flüssigkeitsvorlage beim Befüllen des Spülkastens zwangsläufig auf, so daß bei gefülltem Spülkasten die Flüssigkeitsvorlage gefüllt sein muß. Die Entleerung der Flüssigkeitsvorlage erfolgt durch die Öffnung eines Flüssigkeitventils, so daß die Flüssigkeit aus der Flüssigkeitsvorlage auf Grund ihres eigenen Gewichtes abfließen kann. Dieser Abfluß erfolgt in Richtung auf den Spülkasten, so daß sie für die Zwecke der Spülung des Toilettenbeckens zur Verfügung steht. Auf diese Weise arbeitet die Vorrichtung nicht nur sehr sicher sondern auch unter optimaler Einsparung des als Flüssigkeit in Betracht kommenden Wassers. Sie stellt sich deswegen als besonders unweltfreundlich dar.

Gemäß einer bevorzugten Ausführungsform der Erfindung ist der steuerbare Flüssigkeitsauslaß in einem Behälter angeordnet, mit dem die Flüssigkeitsvorlage in kommuniziernder Verbindung steht.

Diese Anordnung der Flüssigkeitsvorlage innerhalb eines Behälters führt dazu, daß die gesamte Vorrichtung konstruktiv sehr einfach ist und günstig in einem Spülkasten angeordnet werden kann. Dieser Behälter kann auf einfache Weise einerseits mit Flüssigkeit gefüllt und andererseits entleert werden. Die in den Behälter eintretende Flüssigkeit füllt zwangsläuftig die Flüssigkeitsvorlage auf und kann auf störunanfällige Weise aus dem Behälter in Richtung auf den Spülkasten abgelassen werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen :

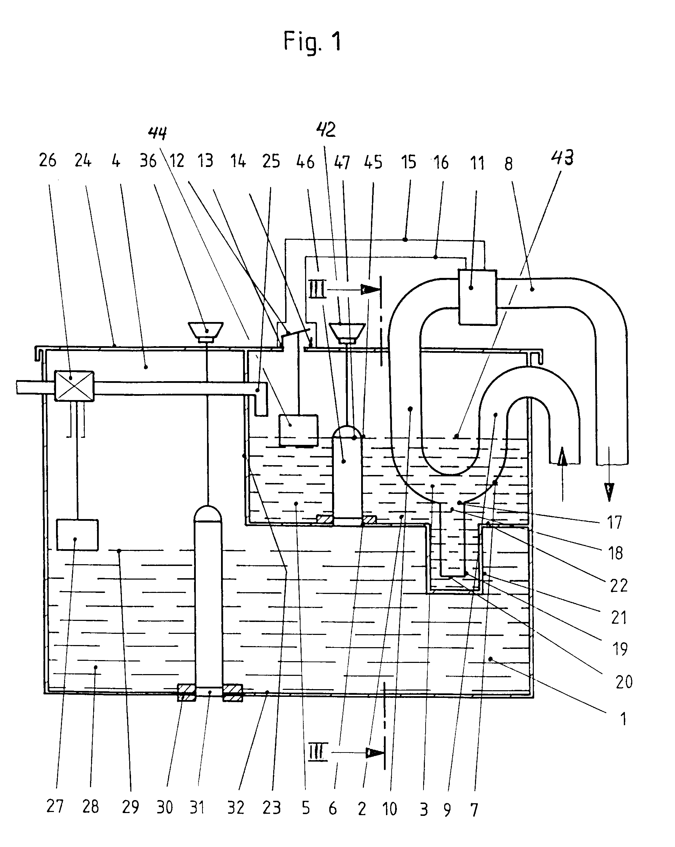

Fig. 1 :     einen Längsschnitt durch eine aus einem Behälter und einem Großbehälter bestehende Vorrichtung mit gefüllter Flüssigkeitsvorlage,

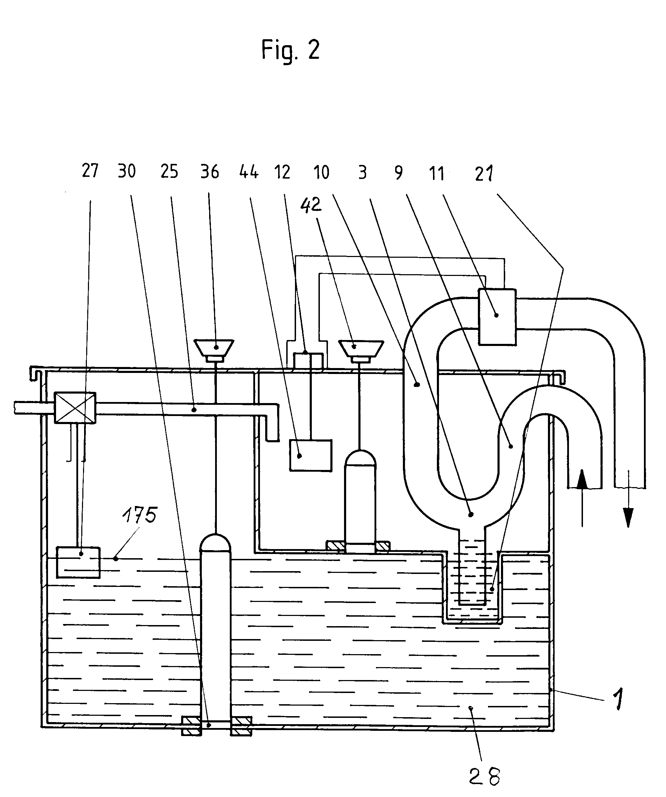

Fig. 2 :     einen Längsschnitt durch eine aus einem Behälter und einem Großbehälter bestehende Vorrichtung mit einleerter Flüssigkeitsvorlage,

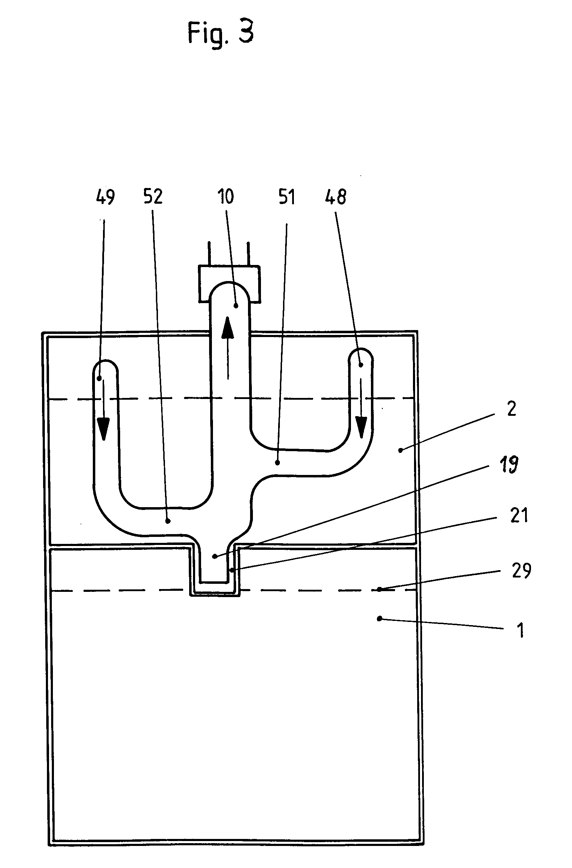

Fig. 3 :     einen Querschnit durch eine Vorrichtung entsprechend der Schnittlinie III-III in Fig. 1,

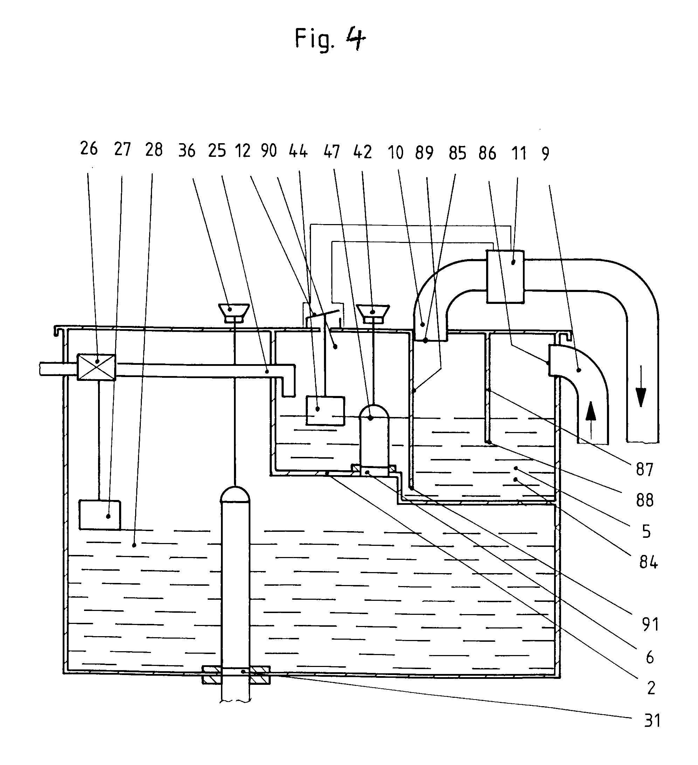

Fig 4 :     einen Längsschnitt durch einen Behälter mit zwei Abteilungen im gefüllten Zustand,

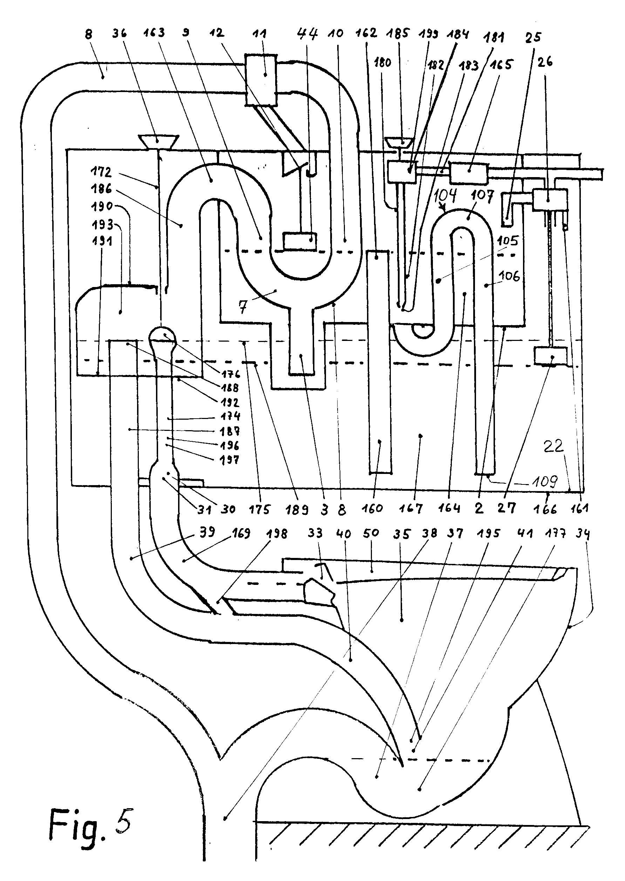

Fig. 5 :     eine schematische Darstellung eines Toilettenbeckens mit einem vergrößerten Spülkasten,

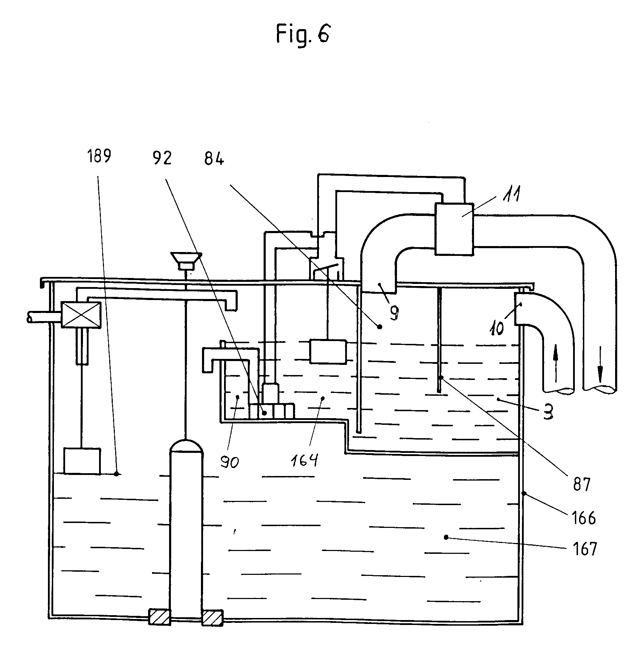

Fig 6 :     einen Längsschnitt durch einen Behälter mit einem in zwei Teilbehälter unterteilten Innenbehälter im gefüllten Zustand und

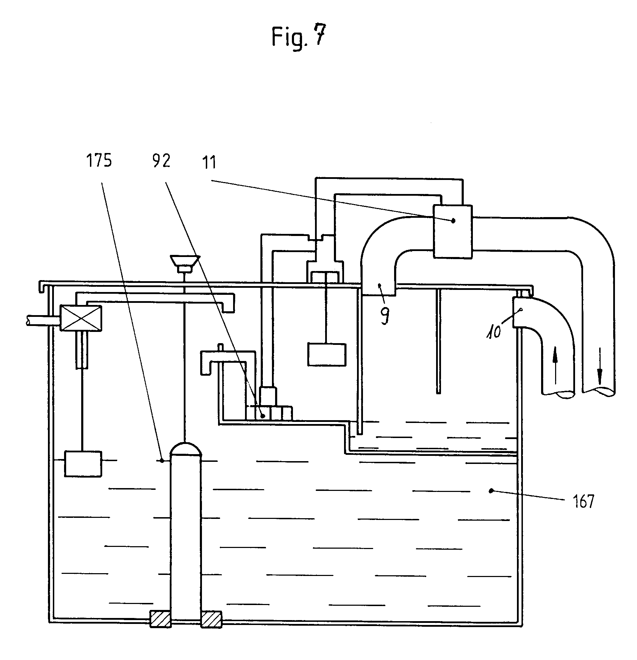

Fig. 7 :     einen Längsschnitt durch einen Behälter mit einem in zwei Teilbehälter unterteilten Innenbehälter im entleerten Zustand.

Eine Vorrichtung besteht im wesentlichen aus einem Großbehälter (1), einem Behälter (2) und einer Flüssigkeitsvorlage (3). Der Behälter (2) ist in einem oberen Teil (4) des Großbehälters (1) so befestigt, daß aus ihm eine Flüssigkeit (5) aufgrund ihres Eigengewichts austreten kann, wenn ein den Behälter (2) verschließendes Ventil (6) geöffnet wird.

Innerhalb des Behälters (2) ist die Flüssigkeitsvorlage (3) als ein Rohrkrümmer (7) eines Rohres (8) angeordnet. In dem Rohrkrümmer (7) mündet einerseits ein Anströmende (9) und andererseits ein Abströmende (10) des Rohres (8). Durch das Anströmende (9) strömnt ein Gas in Richtung auf den Rohrkrümmer (7), während durch das Abströmende (10) das Gas aus dem Rohrkrümmer in Richtung auf ein einen Unterdruck erzeugendes Gebläse (11) abströmt. Dieses Gebläse (11) wird elektrisch angetrieben und liegt an einer nicht dargestellten elektrischen Spannungsquelle, wenn ein Schwimmschalter (12) geschlossen ist, dessen beiden elektrischen Pole (13,14) über entsprechende Leitungen (15,16) mit dem Gebläse (11) verbunden

Im Rohrkrümmer (7) ist an dessen unterster Stelle (17) ein Flüssigkeitsauslaß (18) vorgesehen, durch den der Rohrkrümmer (7) mit dem Behälter (2) in Verbindung steht. An den Flüssigkeitsauslaß (18) schließt sich in Richtung der aus dem Flüssigkeitsauslaß (18) austretenden Flüssigkeit (5) ein Rohrstutzen (19) an der mit seinem dem Flüssigkeitauslaß (18) abgewandten unteren Ende (20) in einen Geruchsverschluß (21) hineinragt, der in einem Behälterboden (22) vorgesehen ist. Dieser Bodenbehälter (22) trennt den Behälter (2) in horizontaler Richtung vom Großbehälter (1) ab. Er ist über eine Seitenwandung (23) mit einem den Großbehälter (1) verschließenden Deckel (24) verbunden. Durch die Seitenwandung (23) mündet ein Zulaufrohr (25) in den Behälter (2). Durch dieses Zulaufrohr (25) wird aus einem nicht dargestellten Netz die Flüssigkeit (3) in den Behälter (2) eingespeist. Den Zulauf der Flüssigkeit (5) steuert ein Schwimmerventil (26), das im Zulaufrohr (25) angeordent ist. Dieses Schwimmerventil (26) ist mit einem Schwimmer (27) ausgerüstet, der auf einer im Großbehälter (1) stehenden Flüssigkeitsmenge (28) schwimmt.

Im gefüllten Zustand des Großbehälters (1) steht die Flüssigkeitsmenge (28) auf einem Pegel (29), dessen Höhe innerhalb des Großbehälters (1) so bemessen ist, daß die gesamte Flüssigkeit aus dem Behälter (2) in den Großbehälter (1) aufgenommen werden kann, ohne daß ein Ablauf der Flüssigkeit (5) aus dem Behälter (2) behindert wird.

Der Großbehälter (1) besitzt einen Flüssigkeitsauslauf (31), der von einem Spülventil (30) verschlossen wird Dieser Flüssigkeitsauslauf (31) ist in einem Boden (32) des Großbehälters (1) vorgesehen, der in etwa planparallel zum Deckel (24) verläuft. Der Flüssigkeitauslauf (31) kann mit einem Zulauf (33) eines Toilettenbeckens (34) verbunden sein, der in dessen Innenraum (35) mündet. In dieser Kombination ist der Großbehälter (1) als ein Spülkasten ausgebildet, auf dessen Deckel (24) ein Betätigungsknopf (36) des Spülventils (30) vorgesehen ist. Der Innenraum (35) des Toilettenbeckens (34) ist über einen Geruchsverschluß (37) mit einem Abflußrohr (38) verbunden. In dieses Abflußrohr (38) mündet das dem Abströmende (10) abgewandte Ende des Rohres (8) . Demgegenüber ist das Anströmende (9) über eine Rohrleitung (39) mit einem Hohlkörper (40) verbunden, der auf mindestens einer Seite in den Innenraum (35) soweit hineinragt, daß er mit seiner Mündung (41) möglichst weit in Richtung auf den Geruchsverschluß (37) unten im Innenraum (35) des Toilettenbeckens (34) liegt. Über diesen Hohlkörper (40) können übelriechende Gase unmittelbar oberhalb des Geruchsverschlusses (37) aus dem unteren Teil des Innenraumes (35) abgesaugt werden.

Die Flüssigkeitsvorlage (3) trennt das Anströmende (9) vom Abströmende (10) ab und verhindert auf diese Weise, daß übelriechende Gase aus dem Abflußrohr (38) über das Abströmende (10) in das Anströmende (9) und von diesem über das Rohr (39) in den Hohlkörper (40) und damit in den Innenraum (35) des Toilettenbeckens (34) gelangen können. Sollten sich bei den Benutzung der Toilette übelriechende Gase im Innenraum (35) des Toilettenbeckens (34) sammeln, so werden diese von dem Gebläse (11) über die Rohrleitung (39) in Richtung auf das Anströmende (9) abgesaugt, sobald die Flüssigkeit (5) aus dem Behälter (2) und damit aus der Flüssigkeitsvorlage (3) abgelassen worden ist. Zu diesem Zwecke wird vor Benutzung der Toilette über einen Zugknopf (42) das Ventil (6) geöffnet, so daß die Flüssigkeit (5) aus dem Behälter (2) in Richtung auf den Großbehälter (1) austreten kann. Auf diese Weise entleert sich nicht nur der Behälter (2) sonderen auch über den Flüssigkeitsauslaß (18) die Flüssigkeitsvorlage (3). Beim Auslaufen der Flüssigkeit (5) aus dem Behälter (2) sinkt deren Pegel (43) ab, so daß mit diesem ein den Schwimmerschalter (12) betätigender Schwimmer (44) absinkt und die Pole (13,14) miteinander verbindet. Auf diese Weise wird das Gebläse (11) eingeschaltet und saugt aus dem Hohlkörper (40) die übelriechenden Gase ab und drückt sie in das Abflußrohr (38) hinein.

Wenn der Innenraum (35) des Toilettenbeckens (34) gespült werden soll, wird das Spülventil (30) durch Anheben des Betätigungsknopfes (36) geöffnet. Nunmehr kann die gesamte Flüssigkeitsmenge, die aus der ursprünglich im Großbehälter (1) vorhandenen Flüssigkeit (28) und der im Behälter (2) enthaltenen Flüssigkeit (5) zusammengesetzt ist, durch den Zulauf (33) in den Innenraum (35) eintreten, diesen spülen und über den Geruchsverschluß (37) in Richtung auf das Abflußrohr (38) abfließen. Bei der Entleerung des Großbehälters (1) sinkt der Pegel (19) im Großbehälter (1) und mit ihm der Schwimmer (27). Durch Absinken des Schwimmers (27) öffnet sich das Schwimmerventil (26), so daß neue Flüssigkeit über das Zulaufrohr (25) in den Behälter (2) eintreten kann. Dieser füllt sich bis zu einer Oberkante (45), die von einem Schließzylinder (46) vorgegeben ist, der das Ventil (6) bildet. Nachdem diese Oberkante (45) erreicht ist, tritt durch einen Überlauf weiter über das Zulaufrohr (25) in den Behälter (2) eintretende Flüssigkeit (5) in den Großbehälter (1) ein. Dieser Überlauf (47) ist an einem dem Ventil (6) abgewandten oberen Ende des Schließzylinders (46) vorgesehen, so daß die aus dem Behälter (2) durch den Überlauf (47) abfließende Flüssigkeit (5) durch den Schließzylinder (46) in den Großbehälter (1) eintreten kann.

Mit zunehmendem Anstieg der Flüssigkeit im Großbehälter (1) hebt sich der Pegel (29). Der auf diesem Pegel (29) aufschwimmende Schwimmer (27) betätigt das Schwimmerventil (26), sobald der Großbehälter (1) seine Füllung erreicht hat. Das Schwimmerventil (26) verschließt das Zulaufrohr (25), so daß keine weitere Flüssigkeit (5) in den Behälter (2) eintreten kann.

Statt eines Rohrkrümmers (7) kann eine Abteilung (84) des Behälters (2) als Flüssigkeitsvorlage (3) ausgebildet sein. Diese ist durch eine Trennwand (87) in zwei Unterabteilungen eingeteilt. Die Trennwand (87) erstreckt sich vom Deckel (24) in Richtung auf den Behälterboden (22) und ragt mit ihrem dem Deckel (24) abgewandten Ende (88) in die bis zum Überlauf (47) stehende Flüssigkeit (5). Demgegenüber stehen die beiden Unterabteilungen über das Ende (88) bei im Behälter (2) abgesenktem Flüssigkeitspegel miteinander in Verbindung.

In eine der beiden Unterabteilungen mündet an einer oberhalb des am Überlauf (47) stehenden oberen Flüssigkeitspegels liegenden ersten Stelle (85) das Abströmende (10), während in der anderen Unterabteilung oberhalb des am Überlauf (47) stehenden oberen Flüssigkeitspegels das Anströmende (9) an einer zweiten Stelle (86) mündet Die Abteilung (84) wird gegenüber einem übrigen Innenraum (90) des Behälters (2) von einer Wand (89) abgetrennt, die sich vom Deckel (24) in Richtung auf den Behälterboden (22) erstreckt und mit ihrem dem Behälterboden (22) zugewandten unteren Ende (91) kurz über diesem endet, so daß dieses untere Ende (91) in den Geruchsverschluß (21) hineinragt. Auf diese Weise wird verhindert, daß Gerüche aus der Abteilung (84) in den übrigen Innenraum (90) des Behälters gelangen können.

Statt eines Anströmendes (10) können auch zwei räumlich voneinander getrennte Anströmenden (48,49) vorgesehen sein, die beide mit dem Abströmende (10) verbunden sind. Diese Verbindung kann auf gleichem Niveau vorgesehen sein, so daß bei Absinken der Flüssigkeit (5) im Behälter (2) die beiden Abströmenden (48,49) gleichzeitig mit dem Abströmende (10) verbunden werden. Dabei ist es zum Beispiel denkbar, daß gleichzeitig überriechende Gase sowohl durch den Hohlkörper (40) als auch an einem dem Geruchsverschluß (37) abgewandten oberen Rand (50) des Toilettenbeckens (34) durch eine nicht dargestellte besondere Rohrleitung abgesaugt werden können.

Es ist jedoch auch möglich, das Anströmende (48) auf einem höheren Niveau (51) in das Abströmende (10) einmünden zu lassen, als das auf einem niedrigeren Niveau (52) einmündende Anströmende (49). Auf diese Weise wird beim Absenken der Flüssigkeit (5) im Behälter (2) zunächst eine Verbindung zwischen dem Anströmende (48) und dem Abströmende (10) hergestellt. Erst bei einem weiteren Absenken der Flüssigkeit (5) im Behälter (2) kommt auch auf dem niedrigeren Niveau (52) eine Verbindung zwischen dem Anströmende (49) und dem Abströmende (10) zustande, so daß nunmehr auch Gase über das Anströmende (49) abgesaugt werden. Eine derartige Vorbindung zwischen dem Anströmende (49) und dem Abströmende (10) über das niedrigere Niveau (52) kommt gegebenenfalls dann in Betracht, wenn in einem über das Anströmende (48) angesaugten Gasstrom bestimmte Vorbedingungen erfüllt sind, beispielsweise eine vorgegebene Anreicherung mit Geruchsstoffen überschritten wird. Erst wenn diese Bedingung erfüllt ist, erfolgt eine weitere Absenkung der Flüssigkeit (5) im Behälter (2) bis auf das niedrigere Niveau (52). Auf diese Weise kann nach Erreichen dieser Bedingung das Gas über beide Anströmenden (48,49) abgesaugt werden.

Die Flüssigkeitsvorlage (3) kann jedoch auch unmittelbar im Großbehälter (1) angeordnet sein, so daß die Anordnung eines Behälters (2) innerhalb des Großbehälters (1) entfällt. Bei dieser Ausführungsform der Erfindung wird die Flüssigkeitsvorlage (3) zur Absaugung von Gasen über das Anströmende (9) in Richtung auf das Abströmende (19) dadurch freigegeben, daß der im Großbehälter (1) vorhandene Flüssigkeitspegel (29) soweit abgesenkt wird, daß aus der Flüssigkeitsvorlage (3) sämtliche Flüssigkeit abgelaufen ist. Zu diesem Zwecke steht die Flüssigkeitsvorlage (3) in der untersten Stelle (17) über einen Flüssigkeitsauslaß unmittelbar mit dem Großbehälter (1) in Verbindung. Dieser Flüssigkeitsauslaß (18) kann jedoch in einen Rohrstutzen (19) münden, der mit seinem dem Flüssigkeitsauslaß (18) abgewandten unteren Ende (20) in einen Geruchsverschluß mündet, der mit dem Boden (32) des Großbehälters (1) fest verbunden ist und mit Flüssigkeit (28) gefüllt bleibt, wenn sich der Inhalt des Großbehälters (1) ansonsten durch das Spülventil (30) ergossen hat.

Die Absenkung des Pegels (43) im Behälter (2) kann auch mit Hilfe eines Flüssigkeitshebers vorgenommen werden. Dieser besteht im wesentlichen aus einer U-förmig ausgebildeten Rohrschleife (104), deren oberster Teil von einem Joch (107) gebildet wird, das im gefüllten Zustand des Behälters (2) über den Pegel (43) hinausragt. Diese Rohrschleife (104) besitzt einen ersten Schenkel (105) und einen zweiten Schenkel (106), die über das Joch (107) miteinander verbunden sind Der zweite Schenkel (106) besitzt ein in den Spülkasten (1) mündendes Ende (109), über das eine aus dem Schenkel (106) abfließende Flüssigkeit (5) abgeführt werden kann. Dieses Ende (109) liegt in lotrechter Richtung tiefer als der Behälterboden (22) in den der erste Schenkel (105) mit seinem dem Joch (107) angewandten Ende (111) mündet.

Auf diese Weise kann die Rohrschleife (104) den Auslauf einer Wassermenge (164) steuern, die sich in dem Behälter (2) befindet. Dieser Behälter (2) ist innerhalb eines als Großbehälter (1) ausgebildeten Spülkasten (166) vorgesehen, in dem eine Spülwassermenge (167) eingefüllt ist, die zur Spülung eines Toilettenbeckens (34) dient. Zu diesem Zwecke ist der Spülkasten (166) über ein Spülrohr (169) mit dem Toilettenbecken (34) verbunden, in dessen oberen Rand (50) das Spülrohr (169) einmündet. Dieses ist gegenüber dem Spülkasten (166) durch ein Spülventil (30) verschlossen, das über ein Betätigungsgestänge (172) geöffnet beziehungsweise geschlossen werden kann. Dieses Betätigungsgestänge ragt mit einem Betätigungsknopf (36) aus dem Spülkasten (166) heraus. Zwischen dem Betätigungsgestänge (172) und dem Spülventil (30) erstreckt sich ein Überlaufrohr (174), das einerseits mit dem Betätigungsgestänge (172) und andererseits mit dem Spülventil (30) verbunden ist. In diesem Überlaufrohr (174) befinden sich in Höhe eines im Spülkasten (166) maximal erreichbaren Wasserpegels (175) Überlauföffnungen (176), durch die das Spülwasser (167) in das Überlaufrohr und von diesem in das Spülrohr eintreten kann. Das Überlaufrohr setzt das Spülrohr (169) in Richtung auf das Betätigungsgestänge (172) fort.

Zur Spülung des Toilettenbeckens (34) wird der Betätigungsknopf (36) angehoben und damit das Spülventil (30) geöffnet. Dadurch kann die innerhalb des Spülkastens (166) vorhandene Wassermenge durch das Spülrohr (169) in das Toilettenbecken (34) eintreten und dieses spülen, so daß ein im Toilettenbecken (34) vorhandenes Abwasser (177) über einen Geruchsverschluß (37) in eine Abwasserleitung (38) abfließen kann Die für diese Zwecke zur Verfügung stehende Spülwassermenge (167) kann durch die zusätzliche Wassermenge (164), die sich im Behälter (2) befindet, vergrößert werden. Zu diesem Zwecke kann die Wassermenge (164) über die Rohrschleife (104) in den Spülkasten (166) eingespült werden . Um diese Einspülung in die Wege zu leiten, wird die gesamte Rohrschleife (104) mit Wasser gefüllt, so daß die Wassermenge (164) in den ersten Schenkel (105) der Rohrschleife (104) eintritt und über den zweiten Schenkel (106) in Richtung auf den Spülkasten (166) abgesaugt wird, dan sich das Ende (109) dieses zweiten Schenkels (106) unterhalb des in den Behälter (2) einmündenden Endes (111) des ersten Schenkels (105) befindet.

Die Befüllung der Rohrschleife (104) geschieht mit Hilfe einer Befüllungsvorrichtung (180), die über eine Zuleitung (181) an ein nicht dargestelltes Wassernetz angeschlossen ist Diese Befüllungsvorrichtung (180) besteht im wesentlichen aus einem Spritzrohr (182), daß mit seinem Spritzende (183) unmittelbar am Ende (111) des ersten Schenkels (105) endet Zwischen dem Spitzrohr (182) und der Zuleitung (181) liegt ein Steuerventil (184), das einen aus dem Behälter (2) und dem Spülkasten (166) herausragenden Betätigungsknopf (185) aufweist. Mit Hilfe dieses Betätigungsknopfes (185) wird das Steuerventil (184) geöffnet, so daß Wasser aus der Zuleitung (181) in das Spritzrohr (182) eintreten und aus dessen Spritzende (183) in das Ende (111) eintreten kann. Durch einen mit Hilfe des Betätigungsknopfes (185) ausgelösten Druckstoß wird die im ersten Schenkel (105) stehende Wassermenge über das Joch hinweggetrieben, so daß die im ersten Schenkel (105) stehende Wassermenge Anschluß an die im zweiten Schenkel (106) stehende Wassermenge findet. Auf diese Weise bildet die Rohrschleife (104) einen Wasserheber aus, der die gesamte Wassermenge (164) aus dem Behälter (2) in den Spülkasten (166) fördert. Auf diese Weise steigt die Spülwassermenge (167) im Spülkasten auf den oberen Wasserpegel (175) an. Sie steht nunmehr für die Ausführung eines großen Spülvorgangs zur Verfügung.

Durch den Behälter (2) erstreckt sich das Rohr (8) mit seinem Anströmende (9) und seinem Abströmende (10). Es ragt mit seinem Rohrkrümmer (7) in die im Behälter (2) stehende Wassermenge (164), so daß diese eine Flüssigkeitsvorlage bildet.

Das Anströmende (9) steht über ein Verbindungsrohr (186) mit einer Belüftungsleitung (187) in Verbindung, die durch den Spülkasten (166) verläuft und mit ihrem oberen Ende (188) oberhalb eines unteren Wasserpegels (189) der im Spülkasten (166) stehenden Spülwassermenge (167) in einer Glocke (190) endet. Diese Glocke (190) besitzt eine der Belüftungsleitung (187) zugewandte offene Bodenfläche (191), durch die das obere Ende (188) in die Glocke (190) hineinragt. Diese taucht mit ihren die offene Bodenfläche (191) umgebenden Rändern (192) in die Spülwasermenge ein, so daß aus einem von der Glocke (190) umschlossenen Innenraum (193) keine Gase in den Spülwasserkasten (166) eindringen können.

Auf diese Weise ist es möglich, mit Hilfe eines von einem Ventilator (194) in Rohr (8) erzeugten Unterdruckes in der Belüftungsleitung (187) einen vom Toilettenbecken (34) in Richtung auf die Glocke (190) gerichteten Abluftstrom zu erzeugen, der über das Verbindungsrohr (186) in das Anströmende (9) und von diesem bei entleerten Behälter (2) in das Abströmende (10) eintritt. Dieser Abluftstrom wird dann von dem Gebläse (11) durch das Rohr (8) in die Abwasserleitung (38) gefördert, mit der das Rohr (8) verbunden ist.

Darüber hinaus ragt in die Glocke (190) durch deren offene Bodenfläche (191) das Überlaufrohr (174) mit seinen Überlauföffnungen (176) hinein. Da auch dieses Überlaufrohr (174) aus dem unteren Pegel (189) und dem oberen Pegel (175) der Spülwasermenge (167) herausragt, kann auch über dieses Überlaufrohr (174) Abluft über das Spülrohr (169) aus dem Toilettenbecken (34) abgesaugt werden. Von dieser Möglichkeit wird insbesondere dann Gebrauch gemacht, wenn sich herausstellen sollte, daß eine in das Toilettenbecken (34) hineinragende untere Öffnung (195) der Belüftungsleitung (187) verstopft ist. In diesem Falle wird zwar die Abluft nicht an der unteren Öffnung (195) abgesaugt, sondern im Bereich des oberen Teils (50) des Toilettenbeckens (34). Diese im oberen Teil (50) stattfindende Absaugung ist zwar nicht so effektiv für die Absaugung der Abluft wie diejenige im Bereich der unteren Öffnung (195), beseitigt aber dennoch einen großen Teil der im Toilettenbecken (34) entstehenden Abluft.

Das Überlaufrohr (174) besitzt in seinem zwischen dem Spülventil (30) und den Überlauföffnungen (176) liegenden Mittelbereich (196) eine Einschnürung (197) seines Querschnittes Diese Einschnürung (197) führt innerhalb des Überlaufrohres (174) zu einer gewollten Vergrößerung des Strömungswiderstandes, so daß innerhalb des Überlaufrohres (174) nur eine gegenüber der Belüftungsleitung (187) relativ kleine Abluftströmung zustande kommt. Auf diese Weise soll erreicht werden, daß der wesentliche Teil der Abluft durch die Belüftungsleitung (187) an der unteren Öffnung (195) abgesaugt wird. Zu diesem Zwecke dient auch ein Verbindungsstück (198), das sich zwischen dem Spülrohr (169) und der Belüftungsleitung (187) erstreckt und diese mit dem Spülrohr (169) verbindet. Dieses Verbindungsstück (198) verläuft schräg in Richtung der Belüftungsleitung (187) und besitzt eine Neigung in Richtung der durch das Spülrohr (169) verlaufenden Abluftströmung. Auf diese Weise wird erreicht, daß ein Teil der durch die untere Öffnung (195) eintretenden Abluft durch das Spülrohr (169) in die Glocke (190) gesaugt wird. Darüber hinaus eröffnet das Verbindungsstück (198) der Spülwasermenge (167) die Möglichkeit, zu einem Teil über die Belüftungsleitung (187) in das Toilettenbecken (34) eingespült zu werden. Diese durch die Belüftungsleitung (187) hindurchtretende Teilmenge des Spülwassers (167) bewirkt eine Spülung der Belüftungsleitung im Bereich der unteren Öffnung (195), so daß diese von Verunreinigungen freigespült wird, die sich gegebenenfalls während der Absaugung der Abluft von ihr angesammelt haben können. Zudem wird durch den tiefen und direkten Eintritt der Spülwasermenge in das Abwasser (177) die Syphonwirkung des Geruchsverschlusses (37) erheblich verbessert, so daß es zu einer wesentlich schnelleren und umfassenderen Freispülung des Geruchsverschlusses (37) und der Abwasserleitung (38) kommt.

Vor Benutzung der Toilette wird der Betätigungsknopf (185) gezogen und dadurch das Steuerventil (184) betätigt. Dadurch tritt eine Wassermenge über das Spritzende (183) in das Ende (111) des ersten Schenkels (105) ein und bringt den von der Rohrschleife gebildeten Wasserheber zum Einsatz. Um Druckstöße auf das Wassernetz zu verhindern, kann das Steuerventil (184) mit einer Verzögerung (199) versehen werden, durch die in der Befüllungsvorrichtung (180) ein verzögerter Druckstoß erzeugt wird. Darüber hinaus ist es möglich, in der Zuleitung (181) einen Rohrbelüfter (165) vorzusehen und mit dessen Hilfe Luft in eine Wassermenge zu saugen, die über die Befüllungsvorrichtung (180) den von der Rohrschleife (104) gebildeten Wasserheber zum Einsatz bringt.

Dieser fördert die Wassermenge (164) in den Spülkasten (166), so daß in diesem eine bis zum Wasserpegel (175) reichende Spülwasermenge zur Verfügung steht. Nach dem Ablauf der Wassermenge (164) aus dem Behälter (2) steht das Anströmende (9) mit dem Abströmende (10) über den Rohrkrümmer (7) in Verbindung. Darüber hinaus hat der Schwimmerschalter (12) das Gebläse (11) eingeschaltet, so daß dieses Abluft über das Abströmende (10), das Anströmende (9) und das Verbindungsrohr (186) aus der Glocke (190) und damit dem Toilettenbecken (34) absaugen kann. Der Schwimmerschalter (12) steht in steuernder Verbindung mit dem auf der Wassermenge (164) schwimmenden Schwimmer (44), der nach dem Ablassen der Wassermenge (164) über die Rohrschleife (104) abgesunken ist und damit den Schwimmerschalter (12) geschlossen hat.

Nach Beendigung der Toilettenbenutzung wird der Betätigungsknopf (36) aus dem Spülkasten (166) herausgezogen und damit das Spülventil (30) geöffnet. Durch dieses Spülventil (30) läuft die Spülwassermenge (167) aus dem Spülkasten (166) zum Zwecke der Spülung in das Toilettenbecken (34) und spült dieses. Mit absinkendem Wasserpegel (175) sinkt auch ein Schwimmer (27) abwärts und öffnet ein mit ihm mechanisch verbundenes Füllventil (26). Dieses verbindet einen Zulauf (25) mit einem nicht dargestellten Wassernetz. Dieser Zulauf (25) ragt in den Behälter (2) hinein und füllt diesen mit der Wassermenge (164). Sobald diese im Behälter (2) erreicht ist, tritt das durch den Zulauf (25) in den Behälter (2) eintretende Wasser über ein Überlaufrohr (160) in den Spülkasten (166) ein, bis dieser bis zum unteren Pegel (189) gefüllt ist. Sobald dieser Pegel (189) erreicht ist, betätigt der Schwimmer (27) das Füllventil (26), so daß dieses den Zulauf (25) vom Wassernetz abtrennt und damit eine weitere Füllung des Spülkastens (166) verhindert. Darüber hinaus ist der Schwimmer (44) auf der Wassermenge (164) aufgeschwommen und hat den Schwimmerschalter (12) geöffnet, so daß auch das Gebläse (11) abgeschaltet ist.

Um während der Benutzung der Toilette eine Auffüllung des Behälters (2) zu verhindern, die gegebenenfalls bei undichtem Füllventil (26) durch eine ungewollt in den Behälter (2) eintretenden Wassermenge stattfinden kann, besitzt das Füllventil (26) einen Tropfauslaß (161), der in den Spülkasten (166) gerichtet ist. Auf diese Weise ist verhindert, daß eine durch ein undichtes Füllventil (26) austretende Wassermenge in den Behälter (2) gelangt und mit diesem auch die zwischen dem Anströmende (9) und dem Abströmende (10) vorhandene Flüssigkeitsvorlage auffüllt. Durch diese Anordnung des Tropfauslasses (161), der in lotrechter Richtung unterhalb des Zulaufs (23) angeordnet ist, wird sichergestellt, daß während der gesamten Benutzung der Toilette ein Luftdurchlaß zwischen dem Anströmende (9) und dem Abströmende (10) besteht.

Das Überlaufrohr (160) muß mit seinem in den Behälter (2) hineinragenden oberen Ende (162) in lotrechter Richtung unterhalb einer vom Joch (107) vorgesehen Höhe liegen. Auf diese Weise wird verhindert, daß bei der Befüllung des Behälters (2) die gesamte Rohrschleife (104) voll Wasser läuft und auf diese Weise ungewollt die Wassermenge (164) über die als Wasserheber wirkende Rohrschleife (104) in den Spülkasten (166) abläuft. Aus diesem Grunde muß das obere Ende (162) so weit unterhalb des Joches (107) angeordnet sein, daß dieses bei der Befüllung des Behälters (2) nicht von Wasser durchströmt wird.

Darüber hinaus muß dafür Sorge getragen werden, daß das Anströmende (9) nicht in seiner gesamten Länge in die Wassermenge (164) des Behälters (2) eintaucht. Vielmehr muß zwischen dem Verbindungsrohr (186) und dem Anströmende (9) ein Rohrkrümmer (163) vorgesehen sein, der sich in lotrechter Richtung höher als das obere Ende (162) des Überlaufrohres (160) erstreckt. Auf diese Weise wird verhindert, daß beim Befüllen des Behälters (2) Wasser über das Anströmende (9) und das Verbindugsrohr (186) in den Spülkasten (166) und gegebenenfalls in die Belüftungsleitung (187) abläuft, bevor der Behälter (2) bis zu seinem vorgesehenen Pegel mit Wasser gefüllt ist Darüber hinaus sollte darauf geachtet werden, daß der Rohrkrümmer (163) auch in lotrechter Richtung oberhalb einer vom Joch (107) vorgegebenen Ebene verläuft.

Anstelle einer als Wasserheber ausgebildeten Rohrschleife (104) kann der Behälter (2) auch mit einer Pumpe (92) versehen sein, die die Wassermenge (164) in den Spülkasten (166) fördert. Die Pumpe (92) kann bei einem in eine erste Abteilung (84) und einen übrigen Innenraum (90) unterteilten Behälter (2) sowohl in der ersten Abteilung (84) als auch in dem übrigen Innenraum (90) untergebracht sein. Entscheidend ist allerdings, daß dafür gesorgt ist, daß die Pumpe (92) die Wassermenge (164) nicht unterhalb eines Pegel absaugt, auf dem das untere Ende (91) der Trennwand (87) liegt.

**Patentansprüche**

1. Vorrichtung zum Steuern eines Abluftstromes, der von einem durch eine in einem Spülkasten (1) angesammelte Spülflüssigkeit (28) spülbaren Toilettenbecken (34) in ein Abluftrohr (38) durch mindestens ein von einer Flüssigkeitsvorlage (3) absperrbares Rohr (8) hindurch tritt, das mit einem Abströmende (10) und einem Anströmende (9) in die Flüssigkeitsvorlage (3) einmündet, die einen steuerbaren Flüssigkeitsauslaß (18) in einer Höhe höchstens aufweist, auf der bei geöffnetem Flüssigkeitsauslaß (18) eine Verbindung zwischen Ab- und Anströmende (10,9) vorgesehen ist, dadurch gekennzeichnet, daß der Flüssigkeitsauslaß (18) sich steuerbar in Richtung auf den Spülkasten (1) öffnet und der Spülkasten (1) über einen die Spülflüssigkeit (5) aus der gefüllten Flüssigkeitsvorlage (3) abgehenden Überlauf (47,180) mit einer Flüssigkeitsquelle verbunden ist.

2. Vorrichtung nach Anspruch 1, dadurch gekennzeichnet, daß mindestens zwei Anströmenden (9) auf voneinander verschiedenen Höhen in die Flüssigkeitsvorlag (3) einmünden.

3. Vorrichtung nach Anspruch 1, dadurch gekennzeichnet, daß mindestend zwei Anströmenden (9) auf gleicher Höhe in die Flüssigkeitsvorlage (3) einmünden.

4. Vorrichtung nach einem oder mehreren der Ansprüche oder den Ansprüchen 1 und 2 bzw. 1 und 3, dadurch gekennzeichnet, daß der steuerbare Flüssigkeitsauslaß (18) in einem Behälter (2) angeordnet ist, mit dem die Flüssigkeitsvorlage (3) in kommunizierender Verbindung steht.

5. Vorrichtung nach Anspruch 1 und 4, dadurch gekennzeichnet, daß der behälter (2) eine Mehrzahl von Flüssigkeitsauslässen aufweist, von denen jeder auf einem von den anderen verschiedenen Niveau (51,52) vorgesehen ist, und auf jedem Niveau (51,52) jeweils ein Anströmende (9) in die Flüssigkeitsvorlage (3) einmündet.

6. Vorrichtung nach einem oder mehreren der Ansprüche oder allen Ansprüchen 1 bis 4, dadurch gekennzeichnet, daß der in der Flüssigkeit (5) des Behälters (1,2) liegende Flüssigkeitsauslaß (18) als Zugang für die Flüssigkeit zur Flüssigkeitsvorlage (3) vorgesehen ist.

7. Vorrichtung nach einem oder mehreren der Ansprüche oder allen Ansprüchen 1 bis 6, dadurch gekennzeichnet, daß der Flüssigkeitsauslaß (18) in einen Geruchsverschluß (21) des Behälters (2) mündet, dessen Flüssigkeitsmenge (28) vom übrigen Behälter (1,2) abgetrennt ist und der unabhängig vom Behälter (1,2) gefüllt ist.

8. Vorrichtung nach einem oder mehreren der Ansprüche oder allen Ansprüchen 1 bis 7, dadurch gekennzeichnet, daß zur Steuerung des Flüssigkeitsauslasses (18) ein Ventil (6) vorgesehen ist, das in dem Spülkasten (166) mündet.

9. Vorrichtung nach einem oder mehreren der Ansprüche oder allen Ansprüchen 1 bis 8, dadurch gekennzeichnet daß der Großbehälter (1) ein an eine Flüssigkeitsquelle angeschlossenes und in den Behälter (2) mündendes Zulaufrohr (25) aufweist, und daß der Behälter (2) über einen Überlauf (47) mit dem Großbehälter (2) über einen Überlauf (47) mit dem Großbehälter (1) verbunden ist.

10. Vorrichtung nach einem oder mehreren der Ansprüche oder allen Ansprüchen 1 bis 9, dadurch gekennzeichnet, daß die Flüssigkeitsvorlage (3) als ein Rohrkrümmer (7) ausgebildet ist, in dessen unterster Stelle der Flüssigkeitsauslaß (18) einmündet.

11. Vorrichtung nach einem oder mehreren der Ansprüche oder allen Ansprüchen 1 bis 9, dadurch gekennzeichnet, daß die Flüssigkeitsvorlage (3) als ein Abteilung (84) des Behälters (2) ausgebildet ist und das Abströmende (10) an einer ersten Stelle (85) und das Anströmende (9) an einer zweiten Stelle (86) in die Abteilung (84) einmündet, und zwischen der ersten und der zweiten Stelle (86) eine die Abteilung (84) in zwei Unterabteilungen unterteilende Trennwand (87) vorgesehen ist, über deren Ende (88) die Unterabteilungen miteinander in Verbindung stehen und daß das Ende (88) in die Flüssigkeit (5) des gefüllten Behälters (2) bis zu einem Niveau hineinragt, das oberhalb des den Behälter (2) entleerenden Ventils (6) liegt.

12. Vorrichtung nach Anspruch 11, dadurch gekennzeichnet, daß die Abteilung (84) von einem das Ventil (6) enthaltenden übrigen Innenraum (90) des Behälters (2) durch eine Wand (89) abgetrennt ist, über deren Ende (91) die Abteilung (84) und der Innenraum (90) in Verbindung stehen und die in die Vertiefung (53) des Behälters hineinragt.

13. Vorrichtung nach einem oder mehreren der Ansprüche oder allen Ansprüchen 1, 6 und 10, dadurch gekennzeichnet, daß die Flüssigkeitsvorlage (3) in dem Spülkasten (166) angeordnet ist, in den das An- und Abströmende (9,10) einer mit einem Toilettenbecken (34) verbundenen Belüftungsleitung (187) hineinragen.

14. Vorrichtung nach einem oder mehreren der Ansprüche oder allen Ansprüchen 4 bis 13, dadurch gekennzeichnet, daß der Spülkasten (166) mit dem Behälter (2) über eine U-förmige Rohrschleife (104) verbunden ist, deren erster Schenke (105) mit seinem Ende (111) in den Behälter (2) bis auf dessen die Flüssigkeitsvorlage aufnehmenden Boden hineinragt und deren zweiter Schenkel (106) mit einem Ende (109) in den Spülkasten (166) mündet.

15. Vorrichtung nach Anspruch 14, dadurch gekennzeichnet, daß auf das Ende (111) des ersten Schenkels (105) ein mit einem Wassenetz verbundenes Spritzrohr (182) gerichtet ist, das ein Steuerventil (184) als Steuerung aufweist, dessen Betätigungsknopf (185) aus dem Spülkasten (166) herausragt.

16. Vorrichtung nach einem oder mehreren der Ansprüche oder allen Ansprüchen 1 bis 15, dadurch gekennzeichnet, daß in dem Behälter (2) ein von dem Wassernehz durch ein Füllventil (26) abtrennbarer Zulauf (25) vorgesehen ist, und in Strömungsrichtung des durch das Füllventil (26) hindurchtretenden Wassers (164) hinter diesem ein in den Spülkasten (166) mündender Tropfauslaß (161) auf einer Ebene vorgesehen ist, die in lotrechter Richtung unterhalb einer durch den Zulauf (25) verlaufenden Ebene angeordnet ist.

17. Vorrichtung nach einem oder mehreren der Ansprüche oder allen Ansprüchen 1 bis 16, dadurch gekennzeichnet, daß das Anströmende (9) in eine an ihrer Bodenfläche (191) offenen Glocke (190) mündet, in derer Bodenfläche (191) die mit dem Toilettenbecken (34) verbundene Belüftungsleitung (187) in lotrechter Richtung oberhalb der Ebene mündet, die von einem im Spülkasten (166) masimal erreichbaren Wasserregel (175) vorgegeben ist.

18. Vorrichtung nach Anspruch 17, dadurch gekennzeichnet, daß der Wasserpegel (175) im Bereich der Bodenfläche (191) sich innerhalb der Glocke (190) erstreckt.

19. Vorrichtung nach Anspruch 17 und 18, dadurch gekennzeichnet, daß in die Glocke (190) ein mit dem Toilettenbecken (34) verbundenes Überlaufrohr (174) hineinragt, dessen Überlauföffnung (176) auf einer vom Wasserpegel (175) vorgegebenen Höhe liegt.

20. Vorrichtung nach Anspruch 19, dadurch gekennzeichnet, daß das Überlaufrohr (174) als eine sich oberhalb eines dem zufluß der Spülflüssigkeit (5) zum Toilettenbecken (34) steuernden Spülventils (30) in eine vom Toilettenbecken (34) abgewandte Richtung erstreckende Verlängerung eines Spülrohres (169) ausgebildet ist, das von einer vom Spülventil (30) gesteuerten Wassermenge (167) durchspült und dessen Spülventil (30) ein Betätigungsgestänge (172) aufweist, das durch die Glocke (190) abdichtend hindurchgeführt ist.

21. Vorrichtung nach einem oder mehreren der Ansprüche 11 bis 12, dadurch gekennzeichnet, daß eine mit einer Pumpe (92) versehene Abteilung (84) oberhalb eines unteren Pegels (189) der im Spülkasten (166) stehenden Spülwassermenge (167) angeordnet ist und die Pumpe (92) einen oberhalb des nach Auffüllen des Spülkastens (166) sich einstellenden Wasserpegels (175) mündenden Drcukstutzen aufweist.

22. Vorrichtung nach einem oder mehreren der Ansprüche 11 bis 12, dadurch gekennzeichnet, daß die die Flüssigkeitsvorlage (3) enthaltende Abteilung (84) allseits luftdicht abgedichtet ist und oberhalb eines sich in ihr einstellenden Wasserpegels (175) je eine Rohreinmündung für das Anströmende (9) und das Abströmende (10) aufweist, zwischen denen die Trennwand (87) vorgesehen ist.

23. Vorrichtung nach einem oder mehreren der Ansprüche oder allen Ansprüchen 11, 12, 21 und 22 dadurch gekennzeichnet, daß das Anströmende (9) auf einem niedrigeren Niveau in den Spülkasten (166) eingeleitet ist als das Abströmende (10).

24. Vorrichtung nach einem oder mehreren der Ansprüche oder allen Ansprüchen 17 bis 21, dadurch gekennzeichnet, daß die Belüftungsleitung (187) in lotrechter Richtung in Höhe des Wasserpegels (175) endet.

25. Vorrichtung nach einem oder mehreren der Ansprüche oder allen Ansprüchen 1 bis 24, dadurch gekennzeichnet, daß die Flüssigkeitsvorlage (3) eine für intensive Toilettenspülung vorgesehene Sonderwassermenge enthält, für deren Eingabe in den Spülkasten (166) eine im Falle der Intensivtoilettenspülung betätigbare und die Flüssigkeitsmenge entleerende Armatur vorgesehen ist.

26. Vorrichtung nach Anspruch 16, dadurch gekennzeichnet, daß zwischen dem Füllventil (26) und dem Wassernetz ein Rohrbelüfter (165) vorgesehen ist.

27. Vorrichtung nach einem oder mehreren der Ansprüche 19 bis 20, dadurch gekennzeichnet, daß das Überlaufrohr (174) als ein zusätzliches Belüftungsrohr ausgebildet ist, das mit seinem Toilettenbecken (34) zugewandten unteren Ende in einen für die Toilettenspülung vorgesehenen oberen Teil des Toilettenbeckens (34) einmündet und an seinem dem Toilettenbecken (34) abgewandten oberen Ende über die Überlauföffnungen (176) mit dem Anströmende (9) in Verbindung steht.

28. Vorrichtung nach einem oder mehreren der Ansprüche oder allen Ansprüchen 19, 20 und 27 dadurch gekennzeichnet, daß das Überlaufrohr (174) eine seine durchtretende Luftmenge begrenzende Einschnürung (197) seines Querschnittes aufweist, die einen geringeren Durchlaßquerschnittes besitzt als die Belüftungsleitung (187).

29. Vorrichtung nach einem oder mehreren der Ansprüche oder allen Ansprüchen 1, 17 bis 20, 27 und 28, dadurch gekennzeichnet, daß in Strömungsrichtung der aus dem Toilettenbekken (34) abgesaugten Luft unmittelbar hinter dem Toilettenbecken (34) zwischen dem Spülrohr (169) und der Belüftungsleitung (187) ein Verbindungsstück (198) vorgesehen ist, das in Richtung einer durch das Spülrohr (169) in Richtung auf das Toilettenbecken (34) abfließenden Luftmenge geneigt ist.

30. Vorrichtung nach Anspruch 29, dadurch gekennzeichnet, daß das Verbindungsstück (198) als Zugang für die Flüssigkeit vom Spülrohr (169) in den dem Toilettenbecken (34) zugewandten Teil der Belüftungsleitung (187) ausgebildet ist.

31. Toilettenbecken nach Ansprch 29 und 30, dadurch gekennzeichnet, daß das Verbindungsstück (198) zur Aufnahme und Einleitung einer Teilmenge der durch das Spülrohr (169) fließenden Spülwassermenge (167) in die Belüftungsleitung (187) einen kleineren Querschnitt aufweist, als das Spülrohr (169).

32. Vorrichtung nach einem oder mehreren der Anprüche oder allen Ansprüchen 29 bis 31, daurch gekennzeichnet, daß ein erster Teil der Spülwassermenge (167) an dem unteren Ende des Spülrohrs (169) und über das Verbindungsstück (198) ein weiterer Teil der Spülwassermenge (167) an der unteren Öffnung (195) dar Belüftungsleitung (187) in das Toilettenbecken (34) eintritt.

## Claims

1. Apparatus for controlling a discharge air flow which passes from a toilet pan (34) which can be flushed by a flushing liquid (28) collected in a flush tank (1), into a discharge air pipe (38) through at least one pipe (8) which can be shut off by a liquid sealing means (3) and which opens with a discharge flow end (10) and a feed flow end (9) into the liquid sealing means (3) which has a controllable liquid outlet (18) at a level at most at which a communication is provided between the discharge and feed flow ends (10, 9) when the liquid outlet (18) is open, characterised in that the liquid outlet (18) opens controllably in the direction towards the flush tank (1) and the flush tank (1) is connected to a liquid source by way of an overflow (47, 180) which delivers the flushing liquid (5) out of the filled liquid sealing means (3).

2. Apparatus according to claim 1 characterised in that at least two feed flow ends (9) open into the liquid sealing means (3) at levels which are different from each other.

3. Apparatus according to claim 1 characterised in that at least two feed flow ends (9) open into the liquid sealing means (3) at the sane level.

4. Apparatus according to one or more of the claims or claims 1 and 2 or claims 1 and 3 respectively characterised in that the controllable liquid outlet (18) is arranged in a container (2) with which the liquid sealing means (3) is in communication.

5. Apparatus according to claim 1 and claim 4 characterised in that the container (2) has a plurality of liquid outlets, each of which is provided at a level (51, 52) different from the others, and a respective feed flow end (9) opens into the liquid sealing means (3) at each level (51, 52).

6. Apparatus according to one or more of the claims or all of claims 1 to 5 characterised in that the liquid outlet (18) which is in the liquid (5) of the container (1, 2) is provided as an access for the liquid to the liquid sealing means (3).

7. Apparatus according to one or more of the claims or all of claims 1 to 6 characterised in that the liquid outlet (18) opens into an odour trap (21) of the container (2), the amount of liquid (28) in which is separated from the rest of the container (1, 2) and which is filled independently of the container (1, 2).

8. Apparatus according to one or more of the claims or all of claims 1 to 7 characterised in that a valve (6) is provided for controlling the liquid outlet (18), the valve (6) opening into the flushing tank (166).

9. Apparatus according to one or more of the claims or all of claims 1 to 8 characterised in that the large container (1) has a feed pipe (25) which is connected to a liquid source and which opens into the container (2) and that the container (2) is connected by way of an overflow (47) to the large container (1).

10. Apparatus according to one or more of the claims or all of claims 1 to 9 characterised in that the liquid sealing means (3) is in the form of a pipe bend (7), the liquid outlet (18) opening into the lowermost point thereof.

11. Apparatus according to one or more of the claims or all of claims 1 to 9 characterised in that the liquid sealing means (3) is in the form of a compartment (84) of the container (2) and the discharge flow end (10) opens into the compartment (84) at a first location (85) and the feed flow end (9) opens into the compartment (84) at a second location (86), and provided between the first location and the second location (86) is a partition (87) which divides the compartment (84) into two sub-compartments and by way of the end (88) of which the sub-compartments are in communication with each other, and that the end (88) projects into the liquid (5) in the filled container (2) to a level which is above the valve (6) for emptying the container (2).

12. Apparatus according to claim 11 characterised in that the compartment (84) is separated from the remainder of the interior (90) of the container (2), which contains the valve (6), by a wall (89), by way of the end (91) of which the compartment (84) and the interior (90) are in communication and which projects into the recess (53) of the container.

13. Apparatus according to one or more of the claims or all of claims 1, 6 and 10 characterised in that the liquid sealing means (3) is arranged in the flush tank (166) into which extend the feed and discharge flow ends (9, 10) of a venting conduit (187) which is connected to a toilet pan (34).

14. Apparatus according to one or more of the claims or all of claims 4 to 13 characterised in that the flush tank (166) is connected to the container (2) by way of a U-shaped pipe bend (104) whose first limb (105) extends with its end (111) into the container (2) as far as the bottom thereof which accommodates the liquid seal and whose second limb (106) opens with an end (109) into the flush tank (166).

15. Apparatus according to claim 14 characterised in that directed on to the end (111) of the first limb (105) is a spray pipe (182) which is connected to a water mains system and which has a control valve (184) as control means, the actuating knob (185) of which projects out of the flush tank (166).

16. Apparatus according to one or more of the claims or all of claims 1 to 15 characterised in that a supply means (25) which can be separated from the water mains system by a filling valve (26) is provided in the container (2) and provided in the direction of flow of the water (164) passing through the filling valve (26) downstream of same is a drip outlet (161) which opens into the flush tank (166), at a plane which is disposed in a vertical direction beneath a plane which passes through the supply bans (25).

17. Apparatus according to one or more of the claims or all of claims 1 to 16 characterised in that the feed flow end (9) opens into a bell (190) which is open at its bottom surface (191) and into the bottom surface (191) of which opens the venting conduit (187) which is connected to the toilet pan (34), in a vertical direction above the plane which is defined by a water level (175) which is the maximum that can be reached in the flush tank (166).

18. Apparatus according to claim 17 characterised in that the water level (175) extends in the region of the bottom surface (191) within the bell (190).

19. Apparatus according to claim 17 and claim 18 characterised in that projecting into the bell (190) is an overflow pipe (174) which is connected to the toilet pan (34) and the overflow opening (176) of which is at a level which is defined by the water level (175).

20. Apparatus according to claim 19 characterised in that the overflow pipe (174) is in the form of an extension of a flush pipe (169) which extends in a direction away from the toilet pan (34) above a flush valve (30) for controlling the feed flow of the flushing liquid (5) to the toilet pan (34), which flush pipe (169) is flushed through by an amount of water (167) which is controlled by the flush valve (30), and whose flush valve (30) has an actuating linkage (172) which is passed sealingly through the bell (190).

21. Apparatus according to one or more of claims 11 to 12 characterised in that a compartment (84) provided with a pump (92) is arranged above a lower level (189) of the amount of flushing water (167) in the flush tank (166) and the pump (92) has a pressure connection which opens above the water level (175) which occurs after filling of the flush tank (166).

22. Apparatus according to one or more of claims 11 and 12 characterised in that the compartment (84) which contains the liquid sealing beams (3) is air-tightly closed off on all sides and above a water level (175) which occurs therein has a respective pipe mouth opening for each of the feed flow end (9) and the discharge flow end (10), between which the partition (87) is provided.

23. Apparatus according to one or more of the claims or all of claims 11, 12, 21 and 22 characterised in that the feed flow end (9) is introduced into the flush tank (166) at a lower level than the discharge flow end (10).

24. Apparatus according to one or more of the claims or all of claims 17 to 21 characterised in that the venting conduit (87) terminates in a vertical direction at the height of the water level (175).

25. Apparatus according to one or are of the claims or all of claims 1 to 24 characterised in that the liquid sealing means (3) contains a special water amount which is intended for intensive toilet flushing and for the introduction of which into the flush tank (166) there is provided a fitting which can be actuated in the event of intensive toilet flushing and which empties the amount of liquid.

26. Apparatus according to claim 16 characterised in that a pipe venting means (165) is provided between the filling valve (26) and the water mains system.

27. Apparatus according to one or more of claims 19 to 20 characterised in that the overflow pipe (174) is in the form of an additional venting pipe which opens with its lower end that is towards the toilet pan (34) into an upper part of the toilet pan (34), which is provided for toilet flushing, and at its upper end which is remote from the toilet pan (34) it is in communication by way of the overflow openings (176) with the feed flow end (9).

28. Apparatus according to one or more of the claims or all of claims 19, 20 and 27 characterised in that the overflow pipe (174) has a constriction (197) in its cross-section which restricts the amount of air passing therethrough and which is of a smaller through-flow cross-section than the venting conduit (187).

29. Apparatus according to one or more of the claims or all of claims 1, 17 to 20, 27 and 28 characterised in that provided in the flow direction of the air which is sucked out of the toilet pan (34) and immediately downstream of the latter between the flushing pipe (169) and the venting conduit (187) is a connecting portion (198) which is inclined in the direction of an amount of air which flows away through the flushing pipe (169) in a direction towards the toilet pan (34).

30. Apparatus according to claim 29 characterised in that the connecting portion (198) is in the form of an access for the liquid from the flushing pipe (169) into the part of the venting conduit (187), which is towards the toilet pan (34).

31. A toilet pan according to claim 29 and claim 30 characterised in that the connecting portion (198), for receiving and introducing a part of the amount of flushing water (167) which flows through the flushing pipe (169), into the venting conduit (187), is of smaller cross-section than the flushing pipe (169).

32. Apparatus according to one or are of the claims or all of claims 29 to 31 characterised in that a first part of the amount of flushing water (167) passes into the toilet pan (34) at the lower end of the flushing pipe (169) and by way of the connecting portion (198) a further part of the amount of flushing water (167) enters into the toilet pan (34) at the lower opening (195) of the venting conduit (187).

**Revendications**

1. Mécanisme pour le contrôle d'un courant d'évacuation d'air, qui passe à partir d'une cuvette de W.C. (34) pouvant être rincée par le liquide de chasse (28) accumulé dans un réservoir de chasse d'eau (1) par un tuyau d'évacuation de l'air (38) à travers au moins un tuyau (8) pouvant être fermé par un barboteur à liquide (3) et qui débouche par une extrémité d'extraction (10) et une extrémité d'arrivée (9) dans le barboteur à liquide (3), qui présente un écoulement de liquide (18) pouvant être contrôlé à une hauteur qui est au maximum celle où une liaison est prévue entre les extrémités d'extraction et d'arrivée (10, 9) si l'écoulement de liquide (18) est ouvert, caractérisé en ce que l'écoulement de liquide (18) s'ouvre avec possibilité de contrôle vers le réservoir de chasse d'eau (1) et en ce que le réservoir de chasse d'eau (1) est relié à une source de liquide par un trop-plein (47, 180) partant du barboteur à liquide (3) rempli.

2. Mécanisme selon la revendication 1, caractérisé en ce qu'au moins deux extrémités d'arrivée (9) débouchent à des hauteurs différentes l'une de l'autre dans le barboteur à liquide (3).

3. Mécanisme selon la revendication 1, caractérisé en ce qu'au moins deux extrémités d'arrivée (9) débouchent à la même hauteur dans le barboteur à liquide (3).

4. Mécanisme selon l'une quelconque des revendications précédentes ou selon les revendications 1 et 2 ou 1 et 3, caractérisé en ce que l'écoulement de liquide (18) pouvant être contrôlé est disposé dans un réservoir (2) avec lequel le barboteur à liquide (3) est en communication.

5. Mécanisme selon les revendications 1 et 4, caractérisé en ce que le réservoir (2) présente une pluralité d'écoulements de liquide dont chacun est prévu à un niveau (51, 52) différent des autres et en ce qu'une extrémité d'arrivée (9) débouche dans le barboteur à liquide (3) à chaque niveau (51, 52).

6. Mécanisme selon l'une quelconque ou l'ensemble des revendications précédentes, caractérisé en ce que l'écoulement de liquide (18) situé dans le liquide (5) du réservoir (1, 2) est prévu comme un accès au barboteur à liquide (3) pour le liquide.

7. Mécanisme selon l'une quelconque ou l'ensemble des revendications précédentes, caractérisé en ce que l'écoulement de liquide (18) débouche dans un siphon inodore (21) du réservoir (2), dont la quantité de liquide (28) est séparée du reste du réservoir (1, 2) et qui est rempli indépendamment du réservoir (1, 2).

8. Mécanisme selon l'une quelconque ou l'ensemble des revendications précédentes, caractérisé en ce qu'une soupape (6) débouchant dans le réservoir de la chasse d'eau (166) est prévue pour le contrôle de l'écoulement de liquide (18).

9. Mécanisme selon l'une quelconque ou l'ensemble des revendications précédentes, caractérisé en ce que le réservoir principal (1) présente un tuyau d'alimentation (25) raccordé à une source de liquide et débouchant dans le réservoir (2), et en ce que le réservoir (2) est relié par un trop-plein (47) au réservoir principal (1).

10. Mécanisme selon l'une quelconque ou l'ensemble des revendications précédentes, caractérisé en ce que le barboteur à liquide (3) est conçu comme un coude de tuyau (7) dans la partie inférieure duquel débouche l'écoulement de liquide (18).

11. Mécanisme selon l'une quelconque ou l'ensemble des revendications 1 à 9, caractérisé en ce que le barboteur à liquide (3) est conçu comme un compartiment (84) du réservoir (2) et l'extrémité d'extraction (10) débouche en un premier point (85) et l'extrémité d'arrivée (9) en un second point (86) dans le compartiment (84) et entre le premier et le second point (86) il est prévu une paroi de séparation (87) divisant le compartiment (84) en deux sous-compartiments et par-dessus l'extrémité (88) de laquelle les sous-compartiments communiquent entre eux, et en ce que l'extrémité (88) dépasse du liquide (5) du réservoir rempli (2) jusqu'à un niveau situé au-dessus de la soupape (6) vidant le réservoir (2).

12. Mécanisme selon la revendication 11, caractérisé en ce que le compartiment (84) est séparé d'un espace intérieur (90) restant du réservoir (2) contenant la soupape (6) par une paroi (89) par-dessus l'extrémité (91) de laquelle le compartiment (84) et l'espace intérieur (90) communiquent et qui dépasse dans la partie profonde (53) du réservoir.

13. Mécanisme selon l'une quelconque des revendications précédentes ou selon les revendications 1, 6 et 10, caractérisé en ce que le barboteur à liquide (3) est disposé dans le réservoir de chasse d'eau (166), dans lequel dépassent les extrémités d'extraction et d'arrivée (9, 10) d'une conduite d'aération (187) reliée à la cuvette du W.C. (34).

14. Mécanisme selon l'une quelconque des revendications précédentes ou selon l'ensemble des revendications 4 à 13, caractérisé en ce que le réservoir de chasse d'eau (166) est relié au réservoir (2) par une boucle de tuyau en U (104) dont le premier bras (105) dépasse par son extrémité (111) dans le réservoir (2) jusqu'au fond de celui-ci recevant le liquide et dont le second bras (106) débouche par une extrémité (109) dans le réservoir de chasse d'eau (166).

15. Mécanisme selon la revendication 14, caractérisé en ce qu'un tuyau d'injection (182) relié à un réseau d'eau est dirigé sur l'extrémité (111) du premier bras (105), ledit tuyau d'injection présentant comme organe de contrôle une soupape de commande (184) dont le bouton d'actionnement (185) dépasse du réservoir de chasse d'eau (166).

16. Mécanisme selon l'une quelconque ou l'ensemble des revendications précédentes, caractérisé en ce qu'une alimentation (25) pouvant être séparée du réseau d'eau par un robinet de remplissage (26) est prévue dans le réservoir (2) et en ce que dans le sens d'écoulement de l'eau (164) passant par le robinet de remplissage (26) un écoulement goutte à goutte (161) débouchant derrière celui-ci dans le réservoir de chasse d'eau (166) est prévu sur un plan situé perpendiculairement en-dessous d'un plan passant par l'alimentation (25).

17. Mécanisme selon l'une quelconque ou l'ensemble des revendications précédentes, caractérisé en ce que l'extrémité d'arrivée (9) débouche dans une cloche (190) ouverte dans sa surface de fond (191), dans la surface de fond (191) de laquelle la conduite d'aération (187) reliée à la cuvette du W.C. débouche perpendiculairement audessus du plan défini par un niveau d'eau (175) maximal qui puisse être atteint dans le réservoir de chasse d'eau (166).

18. Mécanisme selon la revendication 17, caractérisé en ce que le niveau de l'eau (175) dans le secteur de la surface de fond (191) s'étend à l'intérieur de la cloche (190).

19. Mécanisme selon les revendications 17 et 18, caractérisé en ce qu'un tuyau de trop-plein (174) relié avec la cuvette du W.C. (34), dont l'ouverture de tropplein (176) se trouve à une hauteur prédéterminée par le niveau de l'eau (175), dépasse dans la cloche (190).

20. Mécanisme selon la revendication 19, caractérisé en ce que le tuyau de trop-plein (174) est conçu comme une extension d'un tuyau de chasse (169) s'étendant dans une direction opposée à la cuvette du W.C. (34) au-dessus d'une soupape de chasse (30) commandant l'alimentation en liquide de chasse (5) vers la cuvette du W.C. (34), ledit tuyau de chasse étant parcouru par une quantité d'eau (167) contrôlée par la soupape de chasse (30) et sa soupape de chasse (30) présentant une tige d'actionnement (172) qui est guidée à travers la cloche (190) de manière étanche.

21. Mécanisme selon l'une quelconque des revendications 11 et 12, caractérisé en ce qu'un compartiment (84) pourvu d'une pompe (92) est disposé audessus d'un niveau inférieur (189) de la quantité d'eau de chasse (167) située dans le réservoir de chasse d'eau (166) et la pompe (92) présente un tuyau de refoulement débouchant au-dessus du niveau d'eau (175) qui s'établit après le remplissage du réservoir de chasse d'eau (166).

22. Mécanisme selon l'une quelconque des revendications 11 et 12, caractérisé en ce que le compartiment (84) contenant le barboteur à liquide (3) est isolé de tous côtés de manière étanche à l'air et présente au-dessus d'un niveau d'eau (175) s'établissant dedans une embouchure de tuyau pour l'extrémité d'arrivée (9) et une pour l'extrémité d'extraction (10), entre lesquelles est prévue la paroi de séparation (87).

23. Mécanisme selon l'une quelconque des revendications précédentes ou selon l'ensemble des revendications 11, 12, 21 et 22, caractérisé en ce que l'extrémité d'arrivée (9) est introduite dans le réservoir de chasse d'eau (166) à un niveau plus bas que l'extrémité d'extraction (10).

24. Mécanisme selon l'une quelconque des revendications précédentes ou selon l'ensemble des revendications 17 à 21, caractérisé en ce que la conduite d'aération (187) se termine perpendiculairement à la hauteur du niveau de l'eau (175).

25. Mécanisme selon l'une quelconque ou l'ensemble des revendications précédentes, caractérisé en ce que le barboteur à liquide (3) contient une, quantité d'eau spéciale pour le rinçage intensif du W.C., qui est introduite dans le réservoir de chasse d'eau (166) à l'aide d'un robinet pouvant être actionné en cas de rinçage intensif du W.C. et évacuant la quantité de liquide.

26. Mécanisme selon la revendication 16, caractérisé en ce qu'une soupape anti-vide (165) est prévue entre le robinet de remplissage (26) et le réseau d'eau.

27. Mécanisme selon l'une quelconque des revendications 19 à 20, caractérisé en ce que le tuyau de trop-plein (174) est conçu comme un tuyau d'aération supplémentaire, qui débouche par son extrémité inférieure dirigée vers la cuvette du W.C. dans une partie supérieure de la cuvette (34) prévue pour le rinçage du W.C. et communique par son extrémité supérieure opposée à la cuvette du W.C. (34) avec l'extrémité d'arrivée (9) par l'intermédiaire des ouvertures de trop-plein (176).

28. Mécanisme selon l'une quelconque des revendications précédentes ou selon l'ensemble des revendications 19, 20 et 27, caractérisé en ce que le tuyau de trop-plein (174) présente un étranglement (197) de sa section limitant la quantité d'air qui passe et possédant une section de passage plus petite que la conduite d'aération (187).

29. Mécanisme selon l'une quelconque des revendications précédentes ou selon l'ensemble des revendications 1, 17 à 20, 27 et 28, caractérisé en ce que dans le sens du curant de l'air aspiré à partir de la cuvette du W.C. (34) il est prévu immédiatement en arrière de la cuvette (34) entre le tuyau de chasse (169) et la conduite d'aération (187) un raccord (198) qui est orienté dans le sens d'une quantité d'air circulant par le tuyau de chasse (169) en direction de la cuvette du W.C. (34).

30. Mécanisme selon la revendication 29, caractérisé en ce que le raccord (198) est conçu comme un accès pour le liquide du tuyau de chasse (169) à la partie de la conduite d'aération (187) dirigée vers la cuvette du W.C. (34).

31. Cuvette de W.C. selon les revendications 29 et 30, caractérisée en ce que le raccord (198) destiné à capter et à introduire dans une conduite d'aération (187) une quantité partielle de l'eau de chasse (167) s'écoulant dans le tuyau de chasse (169) présente une plus petite section que le tuyau de chasse (169).

32. Mécanisme selon l'une quelconque des revendications précédentes ou selon les revendications 29 à 31, caractérisé en ce qu'une première partie de la quantité d'eau de chasse (167) arrive à l'extrémité inférieure du tuyau de chasse (169) et une autre partie de la quantité d'eau de chasse (167) arrive par le raccord (198) à l'ouverture inférieure (195) de la conduite d'aération (187) dans la cuvette du W.C. (34).

# Fig. 1

# Fig. 2

27  30  25  36  44  12  10  3  9  11  21

42

175

1

28

# Fig. 3

# Fig. 4

Fig. 5

Fig. 6

Fig. 7